# EUROPEAN PATENT APPLICATION

(11) **EP 4 725 722 A1**
(43) Date of publication of application: **15.04.2026**
(21) Application number: 24206109.1
(22) Date of filing: 11.10.2024
(51) Int. Cl.: B60G 7/00, B62D 7/20, B62D 7/22

(54) **TELESCOPING SAFETY STAY**

(71) Applicant: Niclas Thörner Service AB, 661 31 Säffle (SE)
(72) Inventor: THÖRNER, Fredrik, Karlstad (SE)
(74) Representative: Bjerkén Hynell KB

(57) **Abstract**

This invention relates to a telescopic stay, comprising an outer body member (1) and an inner body member (2) arranged to enable said telescopic stay (TS) to telescopically move between a full extended position (FE) and a fully compressed position (FC), said outer telescopic body member (1) comprising a an outer cylindrical body part (10,11) connected to a first attachment member (13, 14) arranged at a first end of said telescopic stay (TS) and said inner telescopic body member (2) comprising an inner body part (20) slidably arranged within said outer cylindrical body part (10,11) and connected to a second attachment member (23, 24) arranged at a second end of said telescopic stay (TS), wherein said first body member (1) further includes a resilient member (4) providing an extending force (SF) arranged enable repositioning of said second body member (2) from a compressed position into said fully extended position (FE) and wherein further there is arranged a hydraulic fluid (5) and a valve member (3) and that said hydraulic fluid (5) passes via said valve member (3) in at least a compressing telescopic action by said telescopic stay (TS), wherein said valve member (3) merely opens up enabling telescopic function in relation to extreme forces acting on the stay.

## Description

### TECHNICAL FIELD

This invention relates to a telescopic stay, comprising an outer telescopic body member and an inner telescopic body member arranged to enable said telescopic stay to occasionally telescopically move between a fully extended position and a fully compressed position in order to improve safety and/or minimize risk for damages.

### BACKGROUND

In many situations there is a need for a stay that may provide extra safety. For instance, regarding cars, especially rally cars, there is a need for safety regarding the support structure of the suspension. As is well known within the field for rally cars they are used on roads that not always are in good conditions. For example, there may be passages where there are rocks and stumps or other obstacles that may be within reach for a rally car when passing by in high speed. Such obstacles may create drastic problems if hit by one of the wheels of the car. For instance, it is rather common that when a rally car hits such an obstacle the steering strut may be subjected to forces that exceeds the breakage limit resulting in a breakage of the steering strut, which in turn may make the car unsteerable. As is evident, this may lead to accidents, sometimes with fatal outcomes. Of course this is a hazard that is highly undesirable.

It appears that there exist no relevant and/or favorable solutions to the above problem.

From US20210114431 there is known a system providing the ability to disconnect anti-roll bars in certain situations where high-articulation of the suspension is beneficial, wherein when the anti-roll bars are disconnected, the suspension at each corner of the vehicle is connected to an anti-roll bar link with a controllable valve between the anti-roll bar and an articulating arm, whereby the forces acting on the wheel in any given corner of the vehicle are imparted into only the suspension components in that corner.

From US20050133321 there is known an antisway bar including a pair of arm portions and a torsion portion extending between the arm portions, a cylinder device including a slidable piston and a control system that restricts the movement of the piston in the cylindrical case when actuated.

EP2982527 shows a four-point linkage for attaching a rigid vehicle axle, enabling adjustment of the stiffness of the suspension.

From US6394238 there is known a doubling acting cylinder comprising a hydraulic circuit control providing load leveling and shock absorption functions, by means of a set of solenoid valves that control the application of pressurized hydraulic fluid.

### SUMMARY OF THE INVENTION

The object of the invention is to provide improved safety in regard to different applications where high shock forces may risk rupture of a stay, e.g. steering strut, which is solved by a solution in accordance with the invention as defined in claim 1.

Thanks to the invention a solution is obtained where a stay, e.g. steering strut, may occasionally provide telescopic function to eliminate the risk of breakage and instead telescopically occasionally move to a retracted position that may absorb a momentarily occurring shock force and thereby avoid breakage and which by means of a resilient return function automatically will return the stay to its operating position. A further advantage is that a stay having the function of the invention may enable slimmer and/or lighter designs, since the maximum force exposure may be significantly reduced thanks to the invention.

### FIGURES

In the following the invention will be described in connection with the enclosed figures wherein:
- Fig. 1: shows a schematic view of a stay according to the invention,
- Fig. 2: shows a cross-sectional view of preferred embodiment of a telescopic security stay according to the invention,
- Fig. 3: shows a part of the stay in Fig.2, in a non-compressed state, and,
- Fig. 4: shows the stay in Fig. 3 in a compressed state.

### DETAILED DESCRIPTION

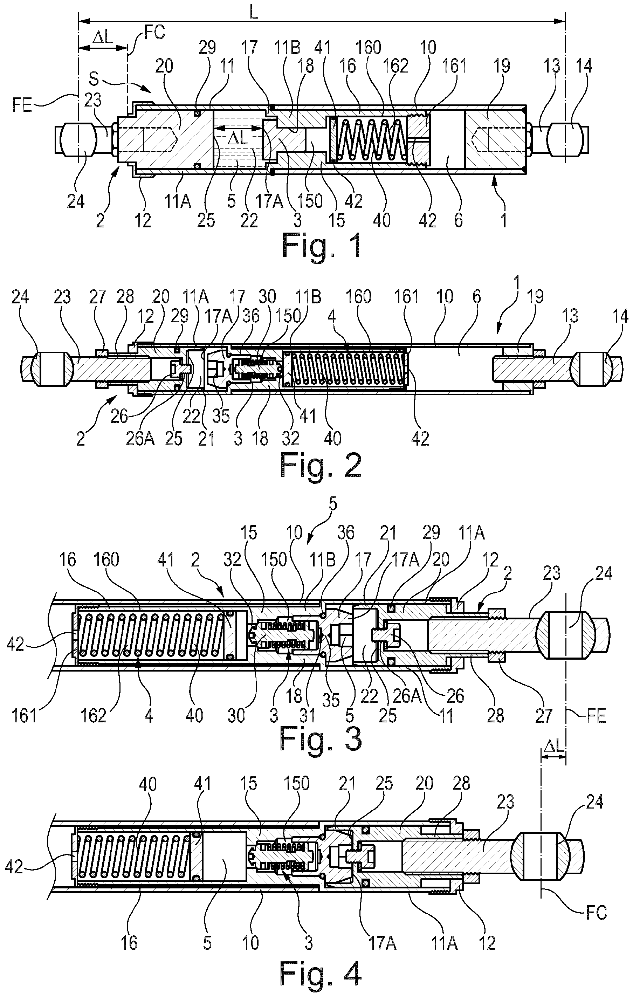

In Fig. 1 there is shown the basic features of a telescopic security stay S according to the invention. There is shown that the security stay S comprises first body member 1 and a second body member 2, wherein said body members are arranged to be telescopically movable in relation to each other from a first fully extended position to a second fully compressed position. In in this example the first body member 1 is called an outer part and the second body member is called an inner part, to make the following description more easily understood.

The outer cylindrical body member 1 comprises an outer cylindric body part 10, 11 that at an end thereof has arranged a first attachment arrangement 13, 14, including a first rod member. 13 and an attachment device (e.g. a ball joint). The first rod member 13 is attached (preferably by threads) to a fixed (preferably welded) bottom plug body 19, that preferably also has a sealing function. The outer cylindric body part 10, 11 preferably comprises an inner cylindrical body member 10 and an outer cylindrical body member 11.

The outer cylindrical body member 11 comprises an upper cylindrical part 11A that preferably has an outer cylindrical surface in line with the inner cylindrical body member 10. Further, the outer cylindrical body member11 comprises an inner body part 11B that is positioned to extend within the inner space of the inner cylindrical body member 10. The inner body part 11B comprises a first part 15 with a valve space 150 having a valve housing 18 that contains a valve 3. Further down (more adjacent the attachment device 13, 14) there is a second part 16 including a hollow cylinder 160 housing a resilient device 4, which in this example in the form of a spring 40. The spring 40 is at one end supported against a bottom plate 161 of said second part 16 and at the other end in contact with a movable piston device 41 that by means of sealings 42 is seal ably arranged within the inner space 162 of said hollow cylinder 160. Between the bottom plug body 19 and the bottom plate 161 there is an empty space 6, e.g. air filled. There is preferably a bottom passage 42 through the bottom plate 161 in connection with the empty space 6, such that fluid (e.g. air) may communicate with the empty space 6, preferably in connection with movement of the piston device 41.

Further, the valve space 150, that preferably is filled with hydraulic fluid 5, communicates with the piston device 41, i.e. the opposite side of the piston device 41 compared to the side contacting the spring 40. The valve 3 communicates with a fluid space 22 that contains hydraulic fluid 5 and may be attached an upper body part 15A of the first part 15. Hence, when the valve 3 opens fluid may pass via the valve into that part of the valve space 150 that is adjacent the piston device 41. The upper body part 15A (and/or a part/device attached to the valve 3) is arranged with an upper surface 17 that is intended to act as a stop for the inner body member 2.

The inner body member 2 comprises a main piston body 20 having a surface 25 facing the upper surface 17 of the first body member 1. The main piston body 20 is seal ably arranged by means of sealings 29 in contact with the inside of the upper cylindrical part 11A of the first body member 1. Further, the main piston body 20 is connected to an attachment member 23, 24 and blocked within the upper cylindrical part 11A by a cap 12. Accordingly, the inner body member 2 may slide ably move within the outer body member 1, between the cap 12 and the upper surface 17 of the first body member 1.

In Fig. 1 the telescopic safety stay is shown in its fully extended position FE such that there is a distance ΔL between the upper end 17 of the inner body member 1 and the contact surface 25 of the inner body 2, which relates to the distance that the attachment member 23, 24 of the inner body member 2 may move from a fully extended position FE to a fully compressed position FC.

The valve 3 is arranged with a pressure constraining function implying that hydraulic fluid 5 may merely pass via the valve 3 when the pressure exceeds a pressure level PR that is below the breakage force/pressure of the stay S (e.g. implying a force FR about 50% of the force BF resulting in breakage of the stay) itself but sufficiently high to avoid a passage of fluid 5 when being exposed to forces at a normal operational level.

For instance, in connection with a telescopic safety valve according to the invention for a rally car there is a need for such a stay used in the suspension to endure relatively high forces without moving away from its fully extended position FE to maintain desired functionality regarding steering of the rally car during normal operation. However, if the rally car will hit a relatively large object, e.g. a relatively large stone, the wheel may be exposed to a force that exceeds the breakage force BF for the stay. In such a situation the valve 3 is arranged to open up, such that hydraulic fluid 5 may pass via the valve 3, and push hydraulic fluid 5 onto the inner piston 41. Hence, the inner body part 2 may then be moved, whereby also the spring 40 will be compressed and accordingly merely a counter assisting force SF from the spring 40 will act against the movement of the inner body member 2. If fully moved the whole a preset distance ΔL, i.e. into contact with the stop surface 17 of the outer body part 1, there has occurred a significant reduction of the force acting on the stay due to the energy absorption by means of the valve 3. For a rally car the stay S must be able to resist relatively high forces and it has been tested and found out that a valve releasing at a pressure RP at above 200 bar, e.g. at about 300 bar, may be a good level for that kind applications. However as is evident the choice of valve and its release pressure RP may vary within large ranges depending on the need of forces that normally act on the stay during normal operation. However, in connection with vehicles it will normally be desired that the release pressure is at least 100 bar. However, in general it is preferably to be put in relation to the breakage force of the stay, e.g. released at a pressure that corresponds to at least 50% of the breakage force of the stay.

Once the external force causing the compression of the stay S is no longer acting upon the stay, e.g. in connection with the car at high speed having passed the stone that was hit, implying fractions of a second, the spring 4 may easily reposition the inner body 2 to its fully extended position FE thanks to having a valve that has no contraining function in the other direction and thereby also replenish hydraulic fluid 5 into the hydraulic chamber 22 between the body members 1, 2. Hence this repositioning action will not require any significant forces but may easily be obtained with this resilient force SF that is extremely much lower than the force RF needed to open up the valve 3, e.g. RF > 10 SF. Accordingly, the valve 3 only has a hindering function in one direction, i.e. acting as a releasing check valve. In a preferred embodiment for a rally car SF is less than 1000 N and RF larger than 10 000 N, more preferred RF being larger than 15 000 N.

In Fig. 2 there is shown a preferred embodiment according to the invention, wherein basic features are the same as described above in relation to Fig. 1. In the following there will therefore mostly be a focus on specific features that are different. As shown the valve 3 is shown in more detail, comprising a static valve part 31, a movable valve part 30 and a valve spring 33 normally keeping them apart, wherein an upper end of the static valve part 31 seals against a valve seat at one end of a lower passage 32 between the valve 3 and the inner piston 41, i.e. possibly opening connection with the space 150 containing the valve 3. Furthermore, there is arranged an upper passage 35 at an upper end of the valve space 150, which passage connects the valve space 150 with the hydraulic fluid space 22. The upper passage 35 is arranged in an upper body part 15A, which in turn is a attached to a valve housing, i.e. both parts included in the so called first part 15. Hence, the upper body part 15A is threadably and sealingly attached to the valve housing 18 and sealed by means of a sealing 36. The upper body part 15A is arranged with a cylindrical upper surface 17 that is intended to act as the stop for the inner body member 2.

As shown the inner body member 2 may comprises a main piston body 20, including an inner portion 20A and outer portion 20B, wherein the outer portion 20B, also forming the front end, has the shape of a cylinder 2B, i.e. a thinner cylinder portion 2B facing the upper body part 15A of the first body member 1. The main piston body 20, e.g. the inner portion 20A, is sealably arranged by means of a sealing 29 in contact with the inside of the upper cylindrical part 11A of the first body member 1. Further, the main piston body 20 is connected to a second attachment member 23, 24 by means of a piston rod portion 28, preferably including a cylindrical attachment part, of the main piston body 20, wherein a screw 27 interacting with a threaded portion of a rod shaped part 23 fixates the main piston body 20 to the second attachment member 23, 24. Accordingly the inner body member 2 may slide ably move within the outer body member 1. The hydraulic fluid 5 may be supplied to the fluid space 22 by means of a passage 26A that during use is sealed by means of a screw 26. This passage may also be used to evacuate air from the space such that merely hydraulic fluid 5 is contained in the space 22 and also in the valve chamber 150.

In Fig. 3 there is shown a situation where the telescopic safety stay is in its fully extended position FE such that there is a distance ΔL (see also Fig. 1) between the contact end 17 of the inner body member 1 and the contact surface 25 of the inner body 2.

As mentioned the valve 3 is arranged with a pressure constraining function in one direction implying that hydraulic fluid 5 may merely pass from the fluid space 22 via the valve 3 when the pressure exceeds a pre-set pressure level PR. With the valve shown in Fig. 2 and 3 this will occur when a flange portion, communicating with fluid space 22, is applied with a fluid pressure at or above PR, which will compress the valve spring 33 such that the movable valve part 30 will move out of sealing interaction with the static valve part 31, whereby hydraulic fluid 5 may pass via the valve 3, through next passage 32, in contact with the inner piston 41, theraby enabling the inner body 2 to move.

In Fig. 4 it is shown a position where the stay S has been compressed into its fully compressed state FC wherein the surface 17 of the second body member 2 is in contact with the surface 25 of the first body member 1, such that further movement will not any longer be possible. As is understood the hydraulic fluid has then moved the inner piston 41, which compresses the spring 40 and also evacuates air from the inner space 162 of the hollow cylinder 160, via the bottom passage 42.

Once the external force causing the compression of the stay is no longer acting upon the stay, the spring 4 may easily reposition the inner body 2 to its fully extended position FE simultaneously replenishing hydraulic fluid into the hydraulic chamber 22 between the body members 1, 2.

It is evident for the skilled person within the field that there exist a variety of evident equivalent modifications that may be applied without inventive skill, e.g. the choice of other valves 3 of known kind that may be set to have a high RP and then provide appropriate adaptions of features in and around the valve chamber 150 to fit said valve 3. Further it is evident that principles of this inventive stay may provide advantages in many different kinds of applications, e.g. requiring a very large stay or a very little stay, since the basic advantages thereof is independent of size and/or where it is used. Further, it is foreseen that the resilient device 4 may be designed in various ways to fulfill the desired function, e.g. using gas or air to achieve the desired resilient action.

## Claims

1. Telescopic stay, comprising an outer body member (1) and an inner body member (2) arranged to enable said telescopic stay (TS) to telescopically move between a full extended position (FE) and a fully compressed position (FC), said outer telescopic body member (1) comprising a an outer cylindrical body part (10,11) connected to a first attachment member (13, 14) arranged at a first end of said telescopic stay (TS) and said inner telescopic body member (2) comprising an inner body part (20) slidably arranged within said outer cylindrical body part (10,11) and connected to a second attachment member (23, 24) arranged at a second end of said telescopic stay (TS), wherein said first body member (1) further includes a resilient member (4) providing an extending force (SF) arranged enable repositioning of said second body member (2) from a compressed position into said fully extended position (FE) and wherein further there is arranged a hydraulic fluid (5) and a valve member (3) and that said hydraulic fluid (5) passes via said valve member (3) in at least a compressing telescopic action by said telescopic stay (TS), **characterized in that** said valve member (3) is arranged to merely enable passage of said hydraulic fluid (5) in said fully extended position (FE) in connection with a between said first and second attachment members (13, 14) acting releasing compressing force (RF) in connection with the pressure (PH) of said hydraulic fluid (5) exceeding a release pressure (RP), wherein said release pressure (RP) corresponds a release compressing force (RF) that exceeds 40% , preferably 50%, more preferred 60%, of a breakage force (BF) of said telescopic stay (TS) and is below 90% of said breakage force (BF).

2. Telescopic stay according to claim 1, wherein said release pressure (RP) corresponds to at least 100 bar, preferably at least 200 bar and more preferred at least 250 bar.

3. Telescopic stay according to claim 1 or 2, wherein the distance (ΔL) between said fully extended position (FE) and said fully compressed position (FC) is less than 20%, preferably 10% or less, of the length (L) between the attachment points (14C, 24C) of said telescopic stay (TS).

4. Telescopic stay according to claim 1, 2 or 3, wherein said extending force (SF) enabling repositioning is significantly smaller than said releasing compressing force (RF), wherein said extending force (SF) is less than 10% of said releasing compressing force (RF), preferably 5% or less, more preferred 3% or less, of said compressing force (RF).

5. Telescopic stay according to any preceding claim, wherein said inner body part (20) includes a passage (26A) controlled by an adjustable device (26) that controllably may be adjusted to either sealingly close or open said passage (26A).

6. Telescopic stay according to claim 5, wherein said inner body part (20) includes an inner body portion (20A) and an outer body portion (20B), wherein at least a part of said outer body portion (20B) has a cylindrical shape.

7. Telescopic stay according to any preceding claim, wherein said outer body member (1) comprises a first part (15) including a valve space (150) housing said valve (3) and a second part (16) including said resilient member (4).

8. Telescopic stay according to claim 7, wherein said first part (15) includes an upper body part (15A), that is releasably attached to said first part (15), wherein said upper body part (15A) includes a first stop surface (17) arranged to act as a first stop member in contact with a second stop surface (25) of said inner body part (20).

9. Telescopic stay according to claim 8, wherein said upper body part (15A) includes a cylindrical portion.

10. Telescopic stay according to any preceding claim, wherein said inner body part (20) includes a piston rod portion (28) that has a diameter that is smaller than the diameter of said inner body part (20).

## Amended claims

### Amended claims in accordance with Rule 137(2) EPC.

1. Telescopic stay, comprising an outer telescopic body member (1) and an inner telescopic body member (2) arranged to enable said telescopic stay (TS) to telescopically move between a full extended position (FE) and a fully compressed position (FC), said outer telescopic body member (1) comprising an outer cylindrical body part (10,11) connected to a first attachment member (13, 14) arranged at a first end of said telescopic stay (TS) and said inner telescopic body member (2) comprising an inner body part (20) slidably arranged within said outer cylindrical body part (10,11) and connected to a second attachment member (23, 24) arranged at a second end of said telescopic stay (TS), wherein said outer telescopic body member (1) further includes a resilient member (4) providing an extending force (SF) arranged to enable repositioning of said inner telescopic body member (2) from a compressed position into said fully extended position (FE) and wherein further there is arranged a hydraulic fluid (5) and a valve member (3) and that said hydraulic fluid (5) passes via said valve member (3) in at least a compressing telescopic action by said telescopic stay (TS), **characterized in that** said valve member (3) is arranged to merely enable passage of said hydraulic fluid (5) in said fully extended position (FE) in connection with a releasing compressing force (RF) acting between said first and second attachment members (13, 14) in connection with the pressure (PH) of said hydraulic fluid (5) exceeding a release pressure (RP), wherein said release pressure (RP) corresponds to a release compressing force (RF) that exceeds 40% , preferably 50%, more preferred 60%, of a breakage force (BF) of said telescopic stay (TS) and is below 90% of said breakage force (BF).

2. Telescopic stay according to claim 1, wherein said release pressure (RP) corresponds to at least 100 bar, preferably at least 200 bar and more preferred at least 250 bar.

3. Telescopic stay according to claim 1 or 2, wherein the distance (ΔL) between said fully extended position (FE) and said fully compressed position (FC) is less than 20%, preferably 10% or less, of the length (L) between the attachment points (14C, 24C) of said telescopic stay (TS).

4. Telescopic stay according to claim 1, 2 or 3, wherein said extending force (SF) enabling repositioning is significantly smaller than said releasing compressing force (RF), wherein said extending force (SF) is less than 10% of said releasing compressing force (RF), preferably 5% or less, more preferred 3% or less, of said compressing force (RF).

5. Telescopic stay according to any preceding claim, wherein said inner body part (20) includes a passage (26A) controlled by an adjustable device (26) that controllably may be adjusted to either sealingly close or open said passage (26A).

6. Telescopic stay according to claim 5, wherein said inner body part (20) includes an inner body portion (20A) and an outer body portion (20B), wherein at least a part of said outer body portion (20B) has a cylindrical shape.

7. Telescopic stay according to any preceding claim, wherein said outer body member (1) comprises an outer cylindrical body member (11) comprising an inner body part (11B) that is positioned to extend within an inner space of the inner cylindrical body member (10) and wherein said inner body part (11B) comprises a first part (15) including a valve space (150) housing said valve (3) and a second part (16) including said resilient member (4).

8. Telescopic stay according to claim 7, wherein said first part (15) includes an upper body part (15A), that is releasably attached to said first part (15), wherein said upper body part (15A) includes a first stop surface (17) arranged to act as a first stop member in contact with a second stop surface (25) of said inner body part (20).

9. Telescopic stay according to claim 8, wherein said upper body part (15A) includes a cylindrical portion.

10. Telescopic stay according to any preceding claim, wherein said inner body part (20) includes a piston rod portion (28) that has a diameter that is smaller than the diameter of said inner body part (20).
